# EUROPEAN PATENT APPLICATION

(11) **EP 4 701 130 A1**
(43) Date of publication of application: **25.02.2026**
(21) Application number: 24196115.0
(22) Date of filing: 23.08.2024
(51) Int. Cl.: H04L 9/40, G05B 19/418, H04L 9/32, H04L 67/12

(54) **ENABLE FIELD DEVICES TO PARTICIPATE IN DATASPACES USING REMOTE CONNECTORS**

(71) Applicant: ABB SCHWEIZ AG, 5400 Baden (CH)
(72) Inventor: HARK, Rhaban, 64347 Griesheim (DE); GRUENER, Sten, 69514 Laudenbach (DE); KARAAGAC, Abdulkadir, 68526 Ladenburg (DE); LINSBAUER, Sofia, 69221 Dossenheim (DE); HEUSCHKEL, Jens, 64331 Weiterstadt (DE)
(74) Representative: Maiwald GmbH

(57) **Abstract**

There is disclosed a method for connecting a field device (30) to a dataspace in industrial plant. The method comprises negotiating, by a first dataspace connector (11) associated with a first company (10), with a second dataspace connector (21) associated with a second company (20) about access to data obtained by the field device (30), wherein the field device is used by the first company, is provided by the second company and is not under control of the second company; based on a result of the negotiating, obtaining, by the first dataspace connector, an access element from the second dataspace connector for accessing the data of the field device; and providing for the first company accessibility to the data obtained by the field device based on the access element.

## Description

### FIELD OF THE INVENTION

The invention relates to enable field devices to participate in dataspaces using remote connectors.

### BACKGROUND

Nowadays use of dataspaces and therein dataspace connectors covers scenarios, where the data (or service) provider has full access and control over the data provisioning endpoint. However, scenarios in which the device providing the data is not accessible directly are also possible: Field devices, such as smart sensors, that generate a variety of valuable data, may be located inaccessible for the producer and/or owner of the device's data. For example, a field device that Company B handed to Company A and therefore resides on Company A's premises but is still owned by Company B. Atop of that, such devices usually do not have the capabilities to host a dataspace connector themselves, nor have the connectivity means to interact directly through the Internet.

However, there is a limitation since for such devices, the data cannot be accessed using the means of a dataspace and therefore not be governed using future data sharing environments, i.e. dataspaces, for example.

Hence, there is room and need for improvement.

### SUMMARY

In view of the above, regarding the sharing of such field device data in the above-indicated scenario, it is thus an object of the present disclosure to overcome the limitation and to enable a sharing of the data based on agreements within dataspaces.

Therefore, to address one or more of these drawbacks, there is provided, in a first aspect, a method for connecting a field device to a dataspace in industrial plants. The method comprises negotiating, by a first dataspace connector associated with a first company, with a second dataspace connector associated with a second company about access to data obtained by the field device. The field device is used by the first company, is provided by the second company and is not under control of the second company. The method further comprises, based on a result of the negotiating, obtaining, by the first dataspace connector, an access element from the second dataspace connector for accessing the data of the field device. The method further comprises providing for the first company accessibility to the data obtained by the field device based on the access element.

It shall be noted that by dataspace connector, it is meant a software entity implementing a framework for cross-organizational data exchange via a data space, including connection to federated service like authentication and service registry, as well as capability to connect to the connectors of other companies discovered via previous ones. It shall further be noted that by field device it is meant a device that usually does not have the capabilities to host a dataspace connector itself, nor connectivity means to interact directly through the Internet for example. An additional reason for not having Internet connectivity on the field device might be cybersecurity resrictions, e.g., for so-called air-gapped devices. For example, the field device may be a sensor. The data obtained by the field device may be data acquired by the field device, for example environmental data like temperature data acquired by a temperature sensor. The negotiating may be an automatic negotiating between the two dataspace connectors, for examples based on predetermined negotiation rules or predetermined conditions to be achieved and/or not to be violated. The access element may be generated at the second company, for example at the second dataspace connector. The access element may be a result of the contract negotiation. I.e. the contract negotiating, if successful, may result in the access element. Successful comprises that an agreement was achieved, i.e. a contract was made. If no contract was made, i.e. if the negotiating was unsuccessful, no access element will be obtained by the first dataspace connector from the second dataspace connector. The first dataspace connector and the second dataspace connector may be communicatively connected. Hence, for a negotiation, one dataspace connector may trigger such negotiation with the other dataspace connector. Moreover, the second company may have handed the field device to the first company, therefore the field device resides on the first company's premises but is still owned by the second company. The first dataspace connector is a software application and may be a software application on a mobile endpoint terminal. The second dataspace connector is a software application and may be a software application on a mobile endpoint terminal. However, it shall be noted that, typically, the first and second dataspace connectors (dataspace connectors in general) are not provided on a mobile endpoint terminal, but rather on a non-mobile entity.

It shall further be noted that, according to several examples of the present disclosure, the first dataspace connector may negotiate for several field devices and/or with several dataspace connectors, which are associated with one or more companies.

The method according to the first aspect is advantageous in that it may participate in enabling field devices with limited capabilities to participate in dataspaces and in enabling field devices to share data through trusted and secured means a dataspace provides. It may further participate in enabling to prevent unauthorized access to a field device's generated data for the party having direct access to the device and in enabling fine-granular data access control based on for example negotiated legally binding contracts. It may further participate in enabling for fine-grained control on data quality, like value rounding or adding noise for example. There are further enabled new business models such as pay-per-use data access, cost reduction for foreign-owned field devices, and centralized management of field devices with respect to data access control and dataspace participation. Moreover, a leasing-giver (of the field device, i.e. the second company for example) may have more control of information flow with regard to a leasing-taker (the first company for example). Thus, data can be used to construct customer-unique contracts and to provide more value, for example cheaper leasing rate if no diagnostic data is provided to third parties.

According to several examples of the present disclosure, the providing may further comprise, based on the access element, avoiding for the first company or for an entity of the first company a continuous direct or indirect interaction with the second company or with an entity of the second company regarding the data. The access element may be periodically renewed, i.e. there may be periodic renewals, for example based on a result of a past negotiation or based on a result of a future negotiation. In more detail, it shall be noted that either a negotiated contract may include that a token will be renewed later on. Or there may be a need to create a new contract for (re)newed tokens. An existing contract is not extended for another period.

An example for an entity of the first company is the first dataspace connector, an example for an entity of the second company is the second dataspace connector

Hence, convenience and reliability regarding usage of the data is further increased for the first company.

According to several examples of the present disclosure, the access element may be an access token indicative of a definition of the result of the negotiating and of a signature associated with the second company. The providing the accessibility may further comprise providing the access token to the field device or to a data-driven service associated with the first company for processing the data; and providing the accessibility to the data at the field device based on the provided access token.

It shall be noted that the definition of the result of the negotiating may be accessibility to a certain amount of data in a certain data quality for a certain time period.

Hence, individual and secure access to specifically needed data is enabled. Thus, the first company may obtain specifically the data it needs, wherein the second company may provide access to only such specifically needed data and to no further data.

According to several examples of the present disclosure, the data may be encrypted. The access element may be decryption key for decrypting the encrypted data. The providing the accessibility may further comprise providing the decryption key to a data-driven service associated with the first company for processing the encrypted data; and providing the accessibility to the encrypted data obtained by the field device based on the provided decryption key.

It shall be noted that the decryption key may be selected by the second company based on a result of the negotiating. For example, one decryption key may allow to encrypt a respective piece or amount of data obtained by the field device.

Hence, individual and secure access to specifically needed data is enabled. Thus, the first company may obtain specifically the data it needs, wherein the second company may provide access to only such specifically needed data and to no further data.

According to a second aspect, there is provided a method for connecting a field device to a dataspace in industrial plants. The method comprises negotiating, by a first dataspace connector associated with a first company, with a second dataspace connector associated with a second company about access to encrypted data obtained by the field device. The field device is used by the first company, is provided by the second company and is not under control of the second company. The method further comprises, based on a result of the negotiating, initiating, by the first dataspace connector, the field device to transfer the encrypted data to an external entity, for example to a decryption trusted execution environment, TEE, for the encrypted data to be decrypted by the external entity, i.e. for example within the decryption TEE. The method further comprises providing for the first company accessibility to the decrypted encrypted data based on the initiating.

It shall be noted that the second company may have provided into the external entity for decrypting the encrypted data. The second company may have hosted or provided the external entity.

The method according to the second aspect is advantageous in that it may participate in enabling field devices with limited capabilities to participate in dataspaces and in enabling field devices to share data through trusted and secured means a dataspace provides. It may further participate in enabling to prevent unauthorized access to a field device's generated data for the party having direct access to the device and in enabling fine-granular data access control based on for example negotiated legally binding contracts. It may further participate in enabling for fine-grained control on data quality, like value rounding or adding noise for example. There are further enabled new business models such as pay-per-use data access, cost reduction for foreign-owned field devices, and centralized management of field devices with respect to data access control and dataspace participation. Moreover, a leasing-giver (of the field device, i.e. the second company for example) may have more control of information flow with regard to a leasing-taker (the first company for example). Thus, data can be used to construct customer-unique contracts and to provide more value, for example cheaper leasing rate if no diagnostic data is provided to third parties. The access element may be periodically renewed, i.e. there may be periodic renewals, for example based on a result of a past negotiation or based on a result of a future negotiation.

According to several examples of the present disclosure, the providing may further comprise, based on the initiating, avoiding for the first company or for an entity of the first company a continuous direct or indirect interaction with the second company or with an entity of the second company regarding the data.

An example for an entity of the first company is the first dataspace connector, an example for an entity of the second company is the second dataspace connector.

Hence, convenience and reliability regarding usage of the data is further increased for the first company.

According to a third aspect, there is provided a method for connecting, in a dataspace system associated with a first company, a field device to the dataspace system in industrial plants. The method comprises negotiating, by a first dataspace connector associated with the first company, with a second dataspace connector associated with a second company about access to data obtained by the field device. The field device is used by the first company, is provided by the second company and is not under control of the second company. The method further comprises, based on a result of the negotiating, obtaining, by the first dataspace connector, an access element from the second dataspace connector for accessing the data of the field device. The method further comprises accessing, by a data-driven service associated with the first company, the data obtained by the field device based on the access element.

It shall be noted that the data-driven service may be any service that processes the data to be obtained from the field device.

The method according to the third aspect is advantageous in that it may participate in enabling field devices with limited capabilities to participate in dataspaces and in enabling field devices to share data through trusted and secured means a dataspace provides. It may further participate in enabling to prevent unauthorized access to a field device's generated data for the party having direct access to the device and in enabling fine-granular data access control based on for example negotiated legally binding contracts. It may further participate in enabling for fine-grained control on data quality, like value rounding or adding noise for example. There are further enabled new business models such as pay-per-use data access, cost reduction for foreign-owned field devices, and centralized management of field devices with respect to data access control and dataspace participation. Moreover, a leasing-giver (of the field device, i.e. the second company for example) may have more control of information flow with regard to a leasing-taker (the first company for example). Thus, data can be used to construct customer-unique contracts and to provide more value, for example cheaper leasing rate if no diagnostic data is provided to third parties.

According to several examples of the present disclosure, the access element may be an access token indicative of a definition of the result of the negotiating and of a signature associated with the second company. The accessing may further comprise providing, by the first dataspace connector, the access token to the field device; and accessing, by the data-driven service, the data at the field device based on the providing. Alternatively, the accessing may further comprise providing, by the first dataspace connector, the access token to the data-driven service; providing, by the data-driven service, the access token to the field device; and accessing, by the data-driven service, the data at the field device based on the providing.

Hence, individual and secure access to specifically needed data is enabled. Thus, the first company may obtain specifically the data it needs, wherein the second company may provide access to only such specifically needed data and to no further data.

According to several examples of the present disclosure, the data may be encrypted. The access element may be a decryption key for decrypting the encrypted data. The accessing may further comprise providing, by the first dataspace connector, the decryption key to the data-driven service; obtaining, by the data-driven service, the encrypted data from the field device; and accessing the obtained encrypted data by decrypting the encrypted data by use of the decryption key.

Hence, individual and secure access to specifically needed data is enabled. Thus, the first company may obtain specifically the data it needs, wherein the second company may provide access to only such specifically needed data and to no further data.

According to a fourth aspect, there is provided a method for connecting, in a dataspace system associated with a first company, a field device to the dataspace system in industrial plant. The method comprises negotiating, by a first dataspace connector associated with the first company, with a second dataspace connector associated with a second company about access to encrypted data obtained by the field device. The field device is used by the first company, is provided by the second company and is not under control of the second company. The method further comprises, based on a result of the negotiating, initiating, by the first dataspace connector, the field device to transfer the encrypted data to an external entity, for example a decryption trusted execution environment, TEE, for the encrypted data to be decrypted by the external entity, i.e. within the decryption TEE for example. The method further comprises obtaining, by a data-driven service associated with the first company, the decrypted encrypted data from the external entity based on the initiating.

The method according to the fourth aspect is advantageous in that it may participate in enabling field devices with limited capabilities to participate in dataspaces and in enabling field devices to share data through trusted and secured means a dataspace provides. It may further participate in enabling to prevent unauthorized access to a field device's generated data for the party having direct access to the device and in enabling fine-granular data access control based on for example negotiated legally binding contracts. It may further participate in enabling for fine-grained control on data quality, like value rounding or adding noise for example. There are further enabled new business models such as pay-per-use data access, cost reduction for foreign-owned field devices, and centralized management of field devices with respect to data access control and dataspace participation. Moreover, a leasing-giver (of the field device, i.e. the second company for example) may have more control of information flow with regard to a leasing-taker (the first company for example). Thus, data can be used to construct customer-unique contracts and to provide more value, for example cheaper leasing rate if no diagnostic data is provided to third parties.

According to several examples of the present disclosure, the negotiating of the third and/or fourth aspect may further comprise negotiating, by a third dataspace connector associated with the first company, with the second dataspace connector associated with the second company about access to the data or the encrypted data obtained by the field device.

Hence, it shall be noted that a company can run any number of dataspace connectors and potentially depending on the size and for redundancy, this may be advantageous. Thus, for example, two different dataspace connectors can negotiate contracts for one same field device.

According to a fifth aspect, there is provided a method for enabling connection of a field device to a dataspace in industrial plants. The method comprises negotiating, by a second dataspace connector associated with a second company, with a first dataspace connector associated with a first company about access to data obtained by the field device. The field device is provided by the second company, is not under control of the second company and is used by the first company.

The method according to the fifth aspect is advantageous in that it may participate in enabling field devices with limited capabilities to participate in dataspaces and in enabling field devices to share data through trusted and secured means a dataspace provides. It may further participate in enabling to prevent unauthorized access to a field device's generated data for the party having direct access to the device and in enabling fine-granular data access control based on for example negotiated legally binding contracts. It may further participate in enabling for fine-grained control on data quality, like value rounding or adding noise for example. There are further enabled new business models such as pay-per-use data access, cost reduction for foreign-owned field devices, and centralized management of field devices with respect to data access control and dataspace participation. Moreover, a leasing-giver (of the field device, i.e. the second company for example) may have more control of information flow with regard to a leasing-taker (the first company for example). Thus, data can be used to construct customer-unique contracts and to provide more value, for example cheaper leasing rate if no diagnostic data is provided to third parties.

According to several examples of the present disclosure, the method may further comprise, based on a result of the negotiating, providing, by the second dataspace connector, an access element to the first dataspace connector for accessing the data.

Hence, individual and secure access to specifically needed data is enabled. Thus, the first company may obtain specifically the data it needs, wherein the second company may provide access to only such specifically needed data and to no further data.

According to several examples of the present disclosure, the access element may be an access token indicative of a definition of the result of the negotiating and of a signature associated with the second company. Alternatively, the data may be encrypted and the access element may be a decryption key for decrypting the encrypted data.

Hence, individual and secure access to specifically needed data is enabled. Thus, the first company may obtain specifically the data it needs, wherein the second company may provide access to only such specifically needed data and to no further data.

According to several examples of the present disclosure, the negotiating may further comprise negotiating, by a fourth dataspace connector associated with the second company, with the first dataspace connector associated with the first company about access to the data obtained by the field device.

Hence, similar to above, it shall be noted that a company can run any number of dataspace connectors and potentially depending on the size and for redundancy, this may be advantageous. Thus, for example, two different dataspace connectors can negotiate contracts for one same field device.

According to a sixth aspect, there is provided a data processing apparatus for connecting a field device to a dataspace in industrial plants. The data processing apparatus comprises a processor being configured to carry out the method of the first aspect and/or of the second aspect.

The data processing apparatus according to the sixth aspect is advantageous in that it may participate in enabling field devices with limited capabilities to participate in dataspaces and in enabling field devices to share data through trusted and secured means a dataspace provides. It may further participate in enabling to prevent unauthorized access to a field device's generated data for the party having direct access to the device and in enabling fine-granular data access control based on for example negotiated legally binding contracts. It may further participate in enabling for fine-grained control on data quality, like value rounding or adding noise for example. There are further enabled new business models such as pay-per-use data access, cost reduction for foreign-owned field devices, and centralized management of field devices with respect to data access control and dataspace participation. Moreover, a leasing-giver (of the field device, i.e. the second company for example) may have more control of information flow with regard to a leasing-taker (the first company for example). Thus, data can be used to construct customer-unique contracts and to provide more value, for example cheaper leasing rate if no diagnostic data is provided to third parties.

According to a seventh aspect, there is provided a data processing apparatus for connecting a field device to a dataspace in industrial plants. The data processing apparatus comprises a processor being configured to carry out the method of the fifth aspect.

The data processing apparatus according to the seventh aspect is advantageous in that it may participate in enabling field devices with limited capabilities to participate in dataspaces and in enabling field devices to share data through trusted and secured means a dataspace provides. It may further participate in enabling to prevent unauthorized access to a field device's generated data for the party having direct access to the device and in enabling fine-granular data access control based on for example negotiated legally binding contracts. It may further participate in enabling for fine-grained control on data quality, like value rounding or adding noise for example. There are further enabled new business models such as pay-per-use data access, cost reduction for foreign-owned field devices, and centralized management of field devices with respect to data access control and dataspace participation. Moreover, a leasing-giver (of the field device, i.e. the second company for example) may have more control of information flow with regard to a leasing-taker (the first company for example). Thus, data can be used to construct customer-unique contracts and to provide more value, for example cheaper leasing rate if no diagnostic data is provided to third parties.

According to an eighth aspect, there is provided a data processing system for connecting, in a dataspace system associated with a first company, a field device to the dataspace system in an industrial plant. The data processing system comprises means for carrying out the method of the third aspect and/or of the fourth aspect.

The data processing system according to the eighth aspect is advantageous in that it may participate in enabling field devices with limited capabilities to participate in dataspaces and in enabling field devices to share data through trusted and secured means a dataspace provides. It may further participate in enabling to prevent unauthorized access to a field device's generated data for the party having direct access to the device and in enabling fine-granular data access control based on for example negotiated legally binding contracts. It may further participate in enabling for fine-grained control on data quality, like value rounding or adding noise for example. There are further enabled new business models such as pay-per-use data access, cost reduction for foreign-owned field devices, and centralized management of field devices with respect to data access control and dataspace participation. Moreover, a leasing-giver (of the field device, i.e. the second company for example) may have more control of information flow with regard to a leasing-taker (the first company for example). Thus, data can be used to construct customer-unique contracts and to provide more value, for example cheaper leasing rate if no diagnostic data is provided to third parties.

According to a nineth aspect, there is provided a data processing system for negotiating between dataspace connectors associated with different dataspaces to access data obtained by a field device in industrial plants. The data processing system comprises a first data processing apparatus according to the sixth aspect and a data processing apparatus according to the seventh aspect. Alternatively, the data processing system comprises the data processing system according to the eighth aspect and a data processing apparatus according to the seventh aspect.

The data processing system according to the nineth aspect is advantageous in that it may participate in enabling field devices with limited capabilities to participate in dataspaces and in enabling field devices to share data through trusted and secured means a dataspace provides. It may further participate in enabling to prevent unauthorized access to a field device's generated data for the party having direct access to the device and in enabling fine-granular data access control based on for example negotiated legally binding contracts. It may further participate in enabling for fine-grained control on data quality, like value rounding or adding noise for example. There are further enabled new business models such as pay-per-use data access, cost reduction for foreign-owned field devices, and centralized management of field devices with respect to data access control and dataspace participation. Moreover, a leasing-giver (of the field device, i.e. the second company for example) may have more control of information flow with regard to a leasing-taker (the first company for example). Thus, data can be used to construct customer-unique contracts and to provide more value, for example cheaper leasing rate if no diagnostic data is provided to third parties.

According to a tenth aspect, there is provided an industrial plant comprising a data processing apparatus according to the sixth aspect, or a data processing apparatus according to the seventh aspect, or a data processing apparatus system to the eighth aspect, or a data processing apparatus system to the nineth aspect.

By "industrial plant", according to several examples, it may be meant an industrial plant, industrial production plant or industrial resource plant like a mine for example, comprising one or more pipelines, production lines and/or assembly lines for transforming one or more educts into a product and/or for assembling one or more components into a final product for example. According to several examples, it may be meant an industrial plant in oil industry, in gas industry, in mining industry, in chemical industry, in wind and power industry, or in food and beverage industry.

The industrial plant according to the tenth aspect is advantageous in that it may participate in enabling to field devices with limited capabilities to participate in dataspaces and in enabling field devices to share data through trusted and secured means a dataspace provides. It may further participate in enabling to prevent unauthorized access to a field device's generated data for the party having direct access to the device and in enabling fine-granular data access control based on for example negotiated legally binding contracts. It may further participate in enabling for fine-grained control on data quality, like value rounding or adding noise for example. There are further enabled new business models such as pay-per-use data access, cost reduction for foreign-owned field devices, and centralized management of field devices with respect to data access control and dataspace participation. Moreover, a leasing-giver (of the field device, i.e. the second company for example) may have more control of information flow with regard to a leasing-taker (the first company for example). Thus, data can be used to construct customer-unique contracts and to provide more value, for example cheaper leasing rate if no diagnostic data is provided to third parties.

According to an eleventh aspect, there is provided a computer-readable medium comprising instructions which, when executed by a computing system, cause the computing system to perform the method according to any of the first aspect to the fifth aspect. The computer-readable medium may be transitory or non-transitory, volatile or non-volatile.

The computer-readable medium according to the eleventh aspect is advantageous in that it may participate in enabling to field devices with limited capabilities to participate in dataspaces and in enabling field devices to share data through trusted and secured means a dataspace provides. It may further participate in enabling to prevent unauthorized access to a field device's generated data for the party having direct access to the device and in enabling fine-granular data access control based on for example negotiated legally binding contracts. It may further participate in enabling for fine-grained control on data quality, like value rounding or adding noise for example. There are further enabled new business models such as pay-per-use data access, cost reduction for foreign-owned field devices, and centralized management of field devices with respect to data access control and dataspace participation. Moreover, a leasing-giver (of the field device, i.e. the second company for example) may have more control of information flow with regard to a leasing-taker (the first company for example). Thus, data can be used to construct customer-unique contracts and to provide more value, for example cheaper leasing rate if no diagnostic data is provided to third parties.

According to a twelfth aspect, there is provided a computer program product comprising instructions which, when executed by a computing system, enable or cause the computing system to perform the method according to any of the first aspect to the fifth aspect. The computer program product may comprise a computer-readable medium comprising instructions of the computer program product.

The computer program product according to the twelfth aspect is advantageous in that it may participate in enabling to field devices with limited capabilities to participate in dataspaces and in enabling field devices to share data through trusted and secured means a dataspace provides. It may further participate in enabling to prevent unauthorized access to a field device's generated data for the party having direct access to the device and in enabling fine-granular data access control based on for example negotiated legally binding contracts. It may further participate in enabling for fine-grained control on data quality, like value rounding or adding noise for example. There are further enabled new business models such as pay-per-use data access, cost reduction for foreign-owned field devices, and centralized management of field devices with respect to data access control and dataspace participation. Moreover, a leasing-giver (of the field device, i.e. the second company for example) may have more control of information flow with regard to a leasing-taker (the first company for example). Thus, data can be used to construct customer-unique contracts and to provide more value, for example cheaper leasing rate if no diagnostic data is provided to third parties.

According to a thirteenth aspect, there is provided a use of at least one of a data processing apparatus according to the sixth aspect, a data processing apparatus according to the seventh aspect, a data processing system according to the eighth aspect, a data processing system according to the nineth aspect, and an industrial plant according to the tenth aspect.

The use according to the thirteenth aspect is advantageous in that it may participate in enabling to field devices with limited capabilities to participate in dataspaces and in enabling field devices to share data through trusted and secured means a dataspace provides. It may further participate in enabling to prevent unauthorized access to a field device's generated data for the party having direct access to the device and in enabling fine-granular data access control based on for example negotiated legally binding contracts. It may further participate in enabling for fine-grained control on data quality, like value rounding or adding noise for example. There are further enabled new business models such as pay-per-use data access, cost reduction for foreign-owned field devices, and centralized management of field devices with respect to data access control and dataspace participation. Moreover, a leasing-giver (of the field device, i.e. the second company for example) may have more control of information flow with regard to a leasing-taker (the first company for example). Thus, data can be used to construct customer-unique contracts and to provide more value, for example cheaper leasing rate if no diagnostic data is provided to third parties.

Optional features of the first, third and/or fifth aspects may form part of any of the remaining aspects, mutatis mutandis.

The methods according to the first to fifth aspects may be at least in parts computer implemented.

The computer-readable medium of the eleventh aspect may have stored thereon the computer program product of the sixth aspect.

The term "obtaining", as used herein, may comprise, for example, receiving from another system, apparatus, or process; receiving via an interaction with a user; loading or retrieving from storage or memory; measuring or capturing using sensors or other data acquisition apparatuses.

The term "providing", as used herein, may comprise, for example, making available, making accessible, transmitting, sending, storing at an accessible storage medium or uploading to an accessible entity.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 illustrates process steps performable in a system according to several examples of the present disclosure;
- Figure 2 illustrates process steps to be performed in the system according to a first example of the present disclosure;
- Figure 3 illustrates process steps to be performed in the system according to a second example of the present disclosure;
- Figure 4 illustrates process steps to be performed in the system according to a third example of the present disclosure;
- Figure 5 illustrates a flowchart indicative of a method according to several examples of the present disclosure;
- Figure 6 illustrates a flowchart indicative of a method according to several examples of the present disclosure;
- Figure 7 illustrates a flowchart indicative of a method according to several examples of the present disclosure;
- Figure 8 shows a block diagram schematically illustrating a data processing apparatus according to several examples of the present disclosure;
- Figure 9 shows a block diagram schematically illustrating a data processing apparatus according to several examples of the present disclosure;
- Figure 10 shows a block diagram schematically illustrating a data processing apparatus according to several examples of the present disclosure;
- Figure 11 illustrates a flowchart indicative of a method according to several examples of the present disclosure; and
- Figure 12 illustrates a flowchart indicative of a method according to several examples of the present disclosure.

### DETAILED DESCRIPTION

In the past decade, dataspaces have gained popularity as a secure and trusted method for data sharing between different companies. They are predicted to become an integral part of everyday operations for industrial companies in the foreseeable future. To interact with core services, for example to establish identity or trust, and to connect to other companies, for example to set up data exchange contracts or transfer data, so-called connectors are the key component to speak corresponding protocols. Nowadays use of dataspaces and therein dataspace connectors covers scenarios, where the data (or service) provider has full access and control over the data provisioning endpoint.

In view thereof, according to several examples of the present disclosure, it is proposed to further develop a concept of separating between providing data and controlling data, for example it is proposed to leverage the concept of the data- and control-plane separation and take it further. Hence, it is disclosed to facilitate contract establishment for data access via a remote dataspace connector for the data produced in a local field device. This makes it possible for resource constrained field devices to offload the direct connectivity to a dataspace. Doing so, the field device, which is itself not connected to a dataspace, is enabled to share its data through the means of a secure and trusted dataspace.

Therefore, according to several examples of the present disclosure, there are provided solutions for overcoming such limitation and to enable a sharing of field device data through a remote dataspace connector. Thus, the field-device can provide data through means of a dataspace by establishing a contract using a remote dataspace connector situated on a first company's premises, wherein the field device is still owned by a second company.

According to several examples of the present disclosure, it is disclosed to connect a field device to a dataspace using a remote dataspace connector in control of the producer and/or owner of the field device. The field device, which may be located at another manufacturer, may provide its data only after successfully agreeing on a data exchange contract negotiated via the dataspace.

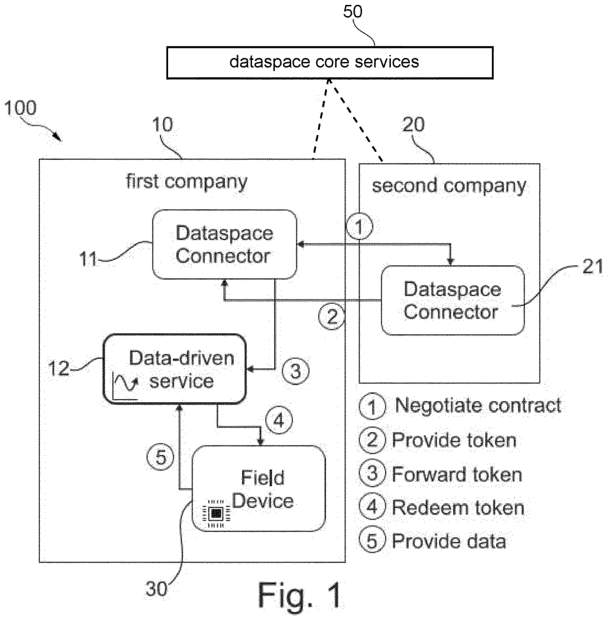

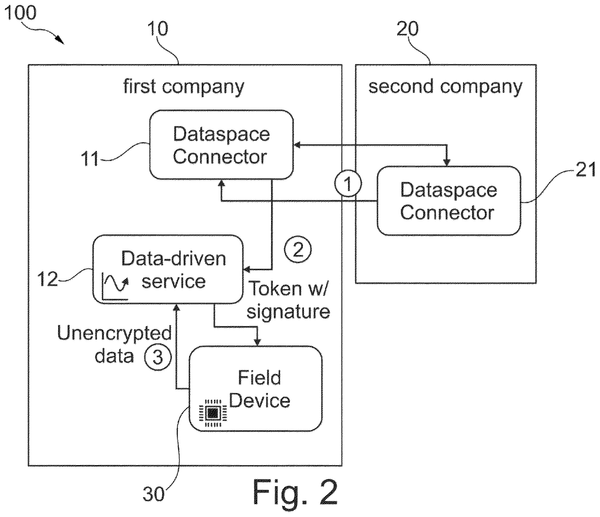

Referring now to Figure 1, Figure 1 illustrates process steps performable in a system according to several examples of the present disclosure. In more detail, Figure 1 shows a system 100 comprising a first company 10 a second company 20 and dataspace core services 50 (it shall be noted that for Figures 2 to 4, the dataspace core services 50 are not illustrated in the Figures). The external core services 50 provide functionality for identification, authentication, auditing, verification, logging, etc., to ensure the secure environment of the dataspace. The second company 20 comprises a second dataspace connector 21. The first company 10 comprises a first dataspace connector 11, a data-driven service 12 and a field device 30 handed over or provided by the second company 20, where the second company 20 may still be the owner of the field device 30. The first dataspace connector 11 and the second dataspace connector 21 are communicatively connected. The first dataspace connector 11 may be communicatively connected with the data-driven service 12 and/or the field device 30. The data-driven service 12 may further be communicatively connected with the field device 30. In Figure 1 there are further indicted five processing steps (1) to (5) as outlined below in more detail. Thus, Figure 1 shows a scenario for the example of the field device 30 manufactured and owned by the second company 10 (or "Company B"). The produced field device 30 is located on the first company's side, for example a customer's site (e.g., as part of a leasing contract). The field device 30 does not have a connection to anything outside of its current environment. By its current environment it may be meant a machine at which the field device 30 is installed. Under control of the second company 20 there is the second dataspace connector 21 which acts on behalf of this field device 30, particularly talking to the first dataspace connector 11 of the first company 10 having hold of the field device 30.

According to several examples of the present disclosure, regarding the field device, it shall be noted for reasons of understandability only, that multiple settings are possible. For example, a field device may be standalone, which is typical for a field device in field, but may also be part of a dedicate machine or a process module, which may be however less common. In case of a machine or module, the corresponding vendor may be interested in "hiding" the field device from an end-user who uses the machine or module.

The first dataspace connector 11 is a software application and may be a software application on a mobile endpoint terminal. The second dataspace connector 21 is a software application and may be a software application on a mobile endpoint terminal.

Referring now to the steps indicated in Figure 1, in step (1), initiated by interest of the first company 10 on using the field device's data, for example to run a health monitoring service, the dataspace connectors 11 and 21 can negotiate contracts to allow access to the data of the field device 30 based on for example trusted dataspace rules they belong to.

In step (2), instead of an endpoint where and how to access the data, the result of a successful contract is a secret, for example an access element like a signed token or a decryption key, which, in step (3), is forwarded to the data-driven service 12 that consumes the data. This could also be a third-party service, if the contract agreement allows it.

In step (4), the data-driven service 12 can redeem the token at the field device 30 to gain access to the data provided by the field device 30.

In step (5), in consequence, the field device 30 may provide the data to the data-driven service 12 (or any other data-driven service or whatever was agreed on in the contract).

The secret (or access element) can have different manifestations of a cryptographic element. For example, a simple access token with embedded description of the agreed access and signed by the field device owner (i.e., the second company 20 in Figure 1) that can be processed or verified by the field device 30. Other instantiations include decryption keys and decryption enclaves, as outlined below in more detail.

According to several examples of the present disclosure, in more detail, in a first step, the dataspace connectors 11 and 21 need to agree on a contract. Existing technologies such as Self-Descriptions can be expected to implement this. In these contracts the access to the data can be defined on a fine-granular basis. Here the contract can define access to single values, batches, or streams of data from the field device. Atop of this, the contract can define what values to share and restrict the data in terms of number or based on a time window, accuracy, etc. For example, the field device owner (i.e., the second company 20 in Figure 1) may agree to provide a batch of values showing the last X-thousand measured temperatures and their timestamps in the field device 30. Another example is to provide an ongoing data-stream of a calculated health status for a predetermined time period, like the next three months for example. Any restriction can be implemented during contract-negotiation. Apart from that the field device 30 is not limited to delivering all data through the dataspace but can be configured to provide basic dataset through a separate interface with the first company 10 (or an entity of the first company 10).

In the second step (2), the dataspace connector 21 of the second company 20 provides a secret to the party having hold of the field device 30, i.e. to the first company 10. Different manifestations may be considered based on the requirements.

For example, referring now to Figure 2, Figure 2 illustrates process steps to be performed in the system 100 according to a first example of the present disclosure.

Accordingly, an access token including a definition of the access that may be granted and a signature of the owning company, i.e. the second company 20, can be provided through the dataspace connectors 11 and 21 (step (1)) and eventually to the field device 30 (step (2)). The field device 30 may check the token for validity assuming hardware-based security, i.e. Trusted-Platform-Modules (TPMs), and provide direct access to unencrypted data based on the description in the token (step (3)).

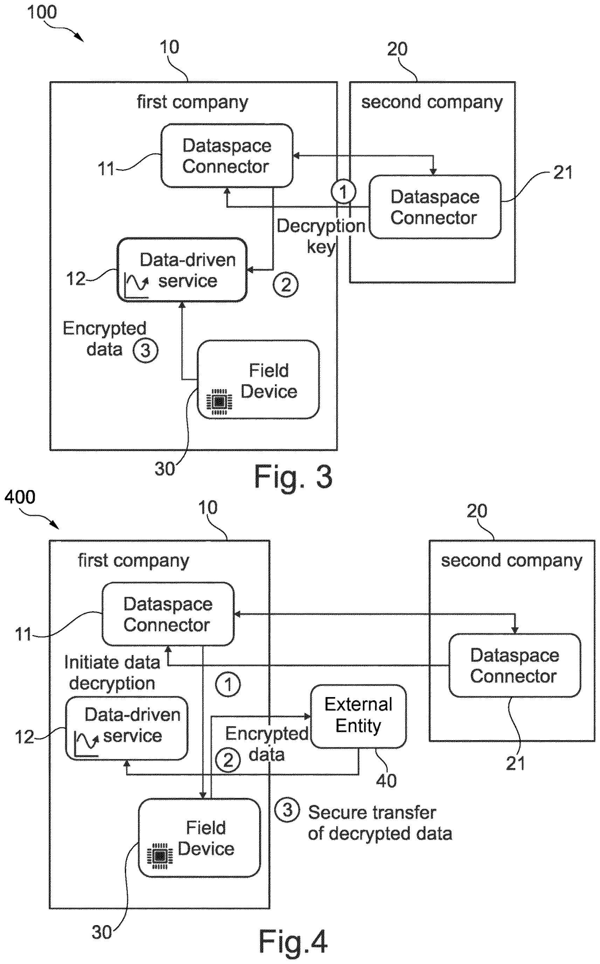

For example, referring now to Figure 3, Figure 3 illustrates process steps to be performed in the system 100 according to a second example of the present disclosure.

According to this manifestation, there is provided a decryption key. The field device 30 can provide the requested data in an encrypted format (step (1)) while the data consumer, the data-driven service 12 for example, can use the provided decryption key (step (2)) to decrypt and use it, wherein the decryption key originates from the second company 20 (step (1)). In this manifestation the field device 30 can be designed more simply and can provide, in an encrypted format, the data continuously or in any predetermined time period or time interval. The granularity and restriction of data access would require further mechanisms such as changes to encryption keys over time and signed descriptions of what data to provide for the field device 30.

For example, referring now to Figure 4, Figure 4 illustrates process steps to be performed in the system 400 according to a second example of the present disclosure. The system 400 further comprises an external entity 40, for example a decryption trusted execution environment (TEE) 40.

According to this manifestation, the encrypted data is not decrypted by the plant owner, i.e. the first company 10, but in the external entity 40 or by the external entity 40, for example using Hardware Security Modules, to enhance security. Therefore, the successful contract negotiation in step (1) initiates the transfer of encrypted data to the external entity 40 in step (2), which decrypts the data and securely provides it in step (3) to the data consumer, for example the data-driven service 12. The external entity 40 can be hosted by the field device owner, i.e. by the second company 20, which would require transfer with potential relaying of the data or provided to the first company 10.

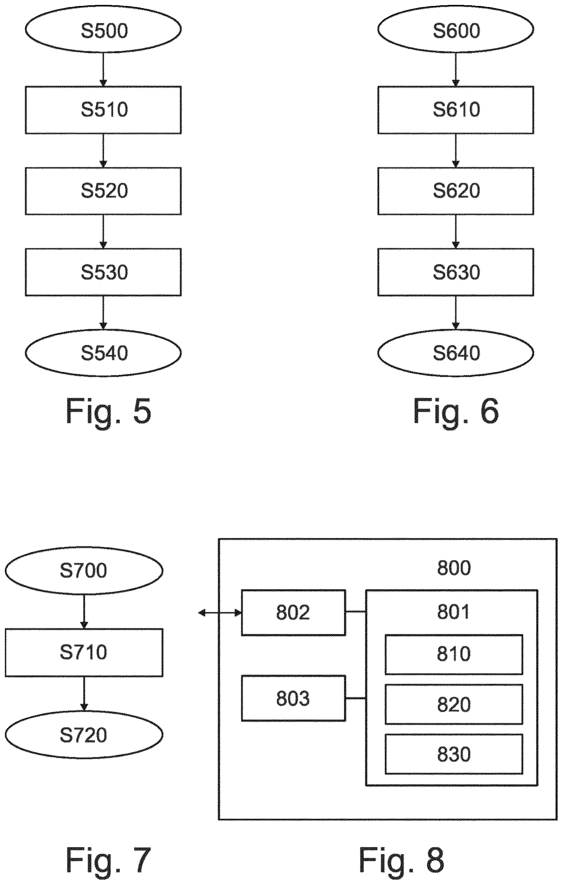

Referring now to Figure 5, Figure 5 illustrates a flowchart indicative of a method according to several examples of the present disclosure. The method may be for connecting a field device to a dataspace in industrial plants, and may be applied by such first dataspace connector 11 as outlined above with reference to Figures 1 to 4.

The method starts in S500.

In S510, the method comprises negotiating, by a first dataspace connector 11 associated with a first company 10, with a second dataspace connector 21 associated with a second company 20 about access to data obtained by the field device 30, wherein the field device 30 is used by the first company 10, is provided by the second company 20 and is not under control of the second company 20.

In S520, the method comprises, based on a result of the negotiating, obtaining, by the first dataspace connector 11, an access element from the second dataspace connector 21 for accessing the data of the field device 30.

In S530, the method comprises providing for the first company 10 accessibility to the data obtained by the field device 30 based on the access element.

The method ends in S540.

Referring now to Figure 6, Figure 6 illustrates a flowchart indicative of a method according to several examples of the present disclosure. The method may be for connecting a field device to a dataspace in industrial plants, and may be applied by such first dataspace connector 11 as outlined above with reference to Figures 1 to 4.

The method starts in S600.

In S610, the method comprises negotiating, by a first dataspace connector 11 associated with a first company 10, with a second dataspace connector 21 associated with a second company 20 about access to encrypted data obtained by the field device 30, wherein the field device 30 is used by the first company 10, is provided by the second company 20 and is not under control of the second company 20.

In S620, the method comprises, based on a result of the negotiating, initiating, by the first dataspace connector 11, the field device 30 to transfer the encrypted data to an external entity 40, for example to a decryption trusted execution environment, TEE, for the encrypted data to be decrypted by the external entity 40.

In S630, the method comprises providing for the first company 10 accessibility to the decrypted encrypted data based on the initiating.

The method ends in S640.

Referring now to Figure 7, Figure 7 illustrates a flowchart indicative of a method according to several examples of the present disclosure. The method may be for enabling connection of a field device to a dataspace in industrial plants, and may be applied by such second dataspace connector 21 as outlined above with reference to Figures 1 to 4.

The method starts in S700.

In S710, the method comprises negotiating, by a second dataspace connector 21 associated with a second company 20, with a first dataspace connector 11 associated with a first company 10 about access to data obtained by the field device 30, wherein the field device 30 is provided by the second company 20, is used by the first company 10 and is not under control of the second company 20.

The method ends in S720.

The methods according to Figures 5 to 7 may be at least in parts computer implemented.

Referring now to Figure 8, Figure 8 shows a block diagram schematically illustrating a data processing apparatus 800 according to several examples of the present disclosure. In particular, according to several examples of the present disclosure, there is provided a data processing apparatus 800 for connecting a field device to a dataspace in industrial plants. The data processing apparatus 800 may be such first dataspace connector 11 as outlined above with reference to Figures 1 to 3. The data processing apparatus 800 comprises a processor 801 being configured to carry out the method of Figure 5.

In more detail, according to various examples, a data processing apparatus 800 being configured to carry out the method of Figure 5 may comprise a processing circuitry, a processing function, a processing means, a processing unit or a processor 801, which enables the data processing apparatus 800 to participate in connecting a field device to a dataspace in industrial plants. The processor 801 may comprise one or more processing portions or functions, wherein the processing portions or functions may be provided as one or more physical or virtual entities. The data processing apparatus 800 may comprise one or more communication interfaces 802. The data processing apparatus 800 may further comprise a memory or memory unit 803 for storing data, programs and/or instructions to be executed by the processor. The memory 803 may be a memory internal to the data processing apparatus 800 or may be a memory external to the data processing apparatus 800, for example at a cloud server. The processor 801 may comprise one or more portions, which enable the data processing apparatus 800 to execute the method of Figure 5 for example. According to several examples of the present disclosure, a negotiating portion 810 may be configured to perform such negotiating according to S510 of Figure 5, an obtaining portion 820 may be configured to perform such obtaining according to S520 of Figure 5, and a providing portion 830 may be configured to perform such providing according to S530 of Figure 5.

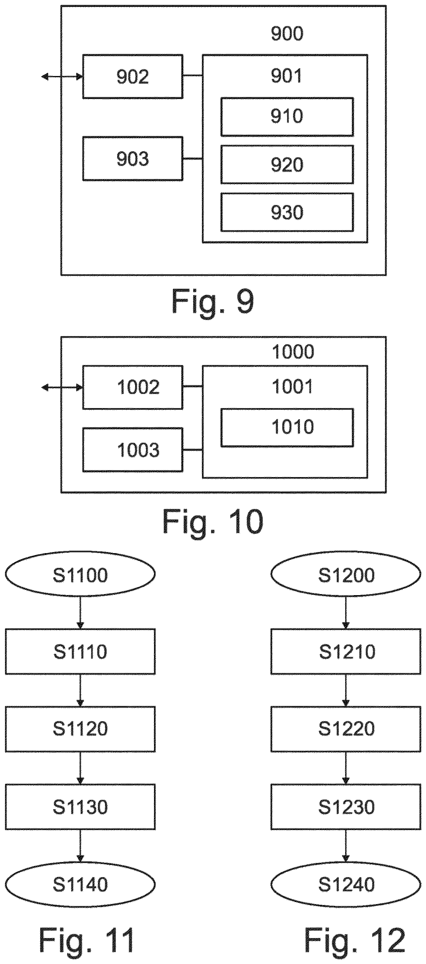

Referring now to Figure 9, Figure 9 shows a block diagram schematically illustrating a data processing apparatus 900 according to several examples of the present disclosure. In particular, according to several examples of the present disclosure, there is provided a data processing apparatus 900 for connecting a field device to a dataspace in industrial plants. The data processing apparatus 900 may be such first dataspace connector 11 as outlined above with reference to Figure 4. The data processing apparatus 900 comprises a processor 901 being configured to carry out the method of Figure 6.

In more detail, according to various examples, a data processing apparatus 900 being configured to carry out the method of Figure 6 may comprise a processing circuitry, a processing function, a processing means, a processing unit or a processor 601, which enables the data processing apparatus 900 to participate in connecting a field device to a dataspace in industrial plants. The processor 901 may comprise one or more processing portions or functions, wherein the processing portions or functions may be provided as one or more physical or virtual entities. The data processing apparatus 900 may comprise one or more communication interfaces 902. The data processing apparatus 900 may further comprise a memory or memory unit 903 for storing data, programs and/or instructions to be executed by the processor. The memory 903 may be a memory internal to the data processing apparatus 900 or may be a memory external to the data processing apparatus 900, for example at a cloud server. The processor 901 may comprise one or more portions, which enable the data processing apparatus 900 to execute the method of Figure 6 for example. According to several examples of the present disclosure, a negotiating portion 910 may be configured to perform such negotiating according to S610 of Figure 6, an initiating portion 920 may be configured to perform such initiating according to S620 of Figure 6, and a providing portion 930 may be configured to perform such providing according to S630 of Figure 6.

Referring now to Figure 10, Figure 10 shows a block diagram schematically illustrating a data processing apparatus 1000 according to several examples of the present disclosure. In particular, according to several examples of the present disclosure, there is provided a data processing apparatus 1000 for enabling connection of a field device to a dataspace in industrial plants. The data processing apparatus 1000 may be such second dataspace connector 21 as outlined above with reference to Figures 1 to 4. The data processing apparatus 1000 comprises a processor 1001 being configured to carry out the method of Figure 7.

In more detail, according to various examples, a data processing apparatus 1000 being configured to carry out the method of Figure 7 may comprise a processing circuitry, a processing function, a processing means, a processing unit or a processor 1001, which enables the data processing apparatus 1000 to participate in enabling connection of a field device to a dataspace in industrial plants. The processor 1001 may comprise one or more processing portions or functions, wherein the processing portions or functions may be provided as one or more physical or virtual entities. The data processing apparatus 1000 may comprise one or more communication interfaces 1002. The data processing apparatus 1000 may further comprise a memory or memory unit 1003 for storing data, programs and/or instructions to be executed by the processor. The memory 1003 may be a memory internal to the data processing apparatus 1000 or may be a memory external to the data processing apparatus 1000, for example at a cloud server. The processor 1001 may comprise one or more portions, which enable the data processing apparatus 1000 to execute the method of Figure 7 for example. According to several examples of the present disclosure, a negotiating portion 1010 may be configured to perform such negotiating according to S710 of Figure 7.

According to several examples of the present disclosure, the respective portions of the data processing apparatuses 800, 900 and 1000 may also be understood as means for carrying out the certain function.

Referring now to Figure 11, Figure 11 illustrates a flowchart indicative of a method according to several examples of the present disclosure. The method may be for connecting, in a dataspace system associated with a first company, a field device to the dataspace system in an industrial plant. The dataspace system may represent such first company 10 or such dataspace as provided by the first company 10 as outlined above with reference to Figures 1 to 3.

The method starts in S1100.

In S1110, the method comprises negotiating, by a first dataspace connector 11 associated with the first company 10, with a second dataspace connector 21 associated with a second company 20 about access to data obtained by the field device 30, wherein the field device 30 is used by the first company 10, is provided by the second company 20 and is not under control of the second company 20.

In S1120, the method comprises, based on a result of the negotiating, obtaining, by the first dataspace connector 11, an access element from the second dataspace connector 21 for accessing the data of the field device 30.

In S1130, the method comprises accessing, by a data-driven service 12 associated with the first company 10, the data obtained by the field device 30 based on the access element.

The method ends in S1140.

Referring now to Figure 12, Figure 12 illustrates a flowchart indicative of a method according to several examples of the present disclosure. The method may be for connecting, in a dataspace system associated with a first company, a field device to the dataspace system in an industrial plant. The dataspace system may represent such first company 10 or such dataspace as provided by the first company 10 as outlined above with reference to Figure 4.

The method starts in S1200.

In S1210, the method comprises negotiating, by a first dataspace connector 11 associated with the first company 10, with a second dataspace connector 21 associated with a second company 20 about access to encrypted data obtained by the field device 30, wherein the field device 30 is used by the first company 10, is provided by the second company 20 and is not under control of the second company 20.

In S1220, the method comprises, based on a result of the negotiating, initiating, by the first dataspace connector 11, the field device 30 to transfer the encrypted data to an external entity 40, for example a decryption trusted execution environment, TEE, for the encrypted data to be decrypted by the external entity 40.

In S1230, the method comprises obtaining, by a data-driven service 12 associated with the first company 10, the decrypted encrypted data from the external entity 40 based on the initiating.

The method ends in S1240.

According to several examples of the present disclosure, there is provided a data processing system for connecting, in a dataspace system associated with a first company, a field device to the dataspace system in an industrial plants. The data processing system may represent the first company and/or the dataspace provided by the first company as outlined above with reference to Figures 1 to 4. The data processing system comprises the data processing apparatus 800 and/or the data processing apparatus 900.

According to several examples of the present disclosure, there is provided a data processing system for negotiating between dataspace connectors associated with different dataspaces to access data obtained by a field device in industrial plants. The data processing system may represent such system 100 as outlined above with reference to Figures 1 to 4.

The first company may represent or comprise an industrial plant. The second company may represent or comprise an industrial plant.

According to several examples of the present disclosure, there is provided a computer-readable medium comprising instructions which, when executed by a computing system, causes the computing system to perform the method according to one of the methods indicated in one of Figures 1 to 4 or according to one of the methods of Figures 5, 6 and 7. The computer-readable medium may be transitory or non-transitory, volatile or non-volatile.

According to several examples of the present disclosure, there is provided a computer program product comprising instructions which, when executed by a computing system, enable or cause the computing system to perform the method according to one of the methods indicated in one of Figures 1 to 4 or according to one of the methods of Figures 5, 6 and 7. The computer program product may comprise a computer-readable medium comprising instructions of the computer program product. The computer-readable medium as mentioned above may have stored thereon the computer program product.

According to several examples of the present disclosure, there is provided a use one of the data processing apparatuses 800, 900 and/or 1000, the computer-readable medium as outlined above and/or the computer program product as outlined above.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for connecting a field device (30) to a dataspace in an industrial plant, the method comprising:
negotiating (S510), by a first dataspace connector (11) associated with a first company (10), with a second dataspace connector (21) associated with a second company (20) about access to data obtained by the field device (30), wherein the field device (30) is used by the first company (10), is provided by the second company (20) and is not under control of the second company (20);
based on a result of the negotiating, obtaining (S520), by the first dataspace connector (11), an access element from the second dataspace connector (21) for accessing the data of the field device; and
providing (S530) for the first company (10) accessibility to the data obtained by the field device (30) based on the access element.

2. The method according to claim 1, wherein the providing further comprises, based on the access element, avoiding for the first company (10) or for an entity of the first company (10) a continuous direct or indirect interaction with the second company (20) or with an entity of the second company (20) regarding the data.

3. The method according to claim 1 or 2,
wherein the access element is an access token indicative of a definition of the result of the negotiating and of a signature associated with the second company;
wherein the providing the accessibility further comprises
providing the access token to the field device or to a data-driven service associated with the first company for processing the data; and
providing the accessibility to the data at the field device based on the provided access token.

4. The method according to claim 1 or 2,
wherein the data is encrypted;
wherein the access element is a decryption key for decrypting the encrypted data;
wherein the providing the accessibility further comprises
providing the decryption key to a data-driven service associated with the first company for processing the encrypted data; and
providing the accessibility to the encrypted data obtained by the field device based on the provided decryption key.

5. A method for connecting a field device (30) to a dataspace in an industrial plant, the method comprising:
negotiating (S610), by a first dataspace connector (11) associated with a first company (10), with a second dataspace connector (21) associated with a second company (20) about access to encrypted data obtained by the field device (30), wherein the field device (30) is used by the first company (10), is provided by the second company (20) and is not under control of the second company (20);
based on a result of the negotiating, initiating (S620), by the first dataspace connector (11), the field device (30) to transfer the encrypted data to an external entity (40) for the encrypted data to be decrypted by the external entity (40); and
providing (S630) for the first company (10) accessibility to the decrypted encrypted data based on the initiating.

6. The method according to claim 5, wherein the providing further comprises, based on the initiating, avoiding for the first company (10) or for an entity of the first company (10) a continuous direct or indirect interaction with the second company (20) or with an entity of the second company (20) regarding the data.

7. A method for connecting, in a dataspace system associated with a first company, a field device to the dataspace system in an industrial plant, the method comprising:
negotiating (S1110), by a first dataspace connector associated with the first company, with a second dataspace connector associated with a second company about access to data obtained by the field device, wherein the field device is used by the first company, is provided by the second company and is not under control of the second company;
based on a result of the negotiating, obtaining (S1120), by the first dataspace connector, an access element from the second dataspace connector for accessing the data of the filed device; and
accessing (S1130), by a data-driven service associated with the first company, the data obtained by the field device based on the access element.

8. The method according to claim 7,
wherein the access element is an access token indicative of a definition of the result of the negotiating and of a signature associated with the second company; and
wherein the accessing further comprises
providing, by the first dataspace connector, the access token to the field device; and
accessing, by the data-driven service, the data at the field device based on the providing;
or wherein the accessing further comprises
providing, by the first dataspace connector, the access token to the data-driven service;
providing, by the data-driven service, the access token to the field device; and
accessing, by the data-driven service, the data at the field device based on the providing.

9. The method according to claim 7,
wherein the data is encrypted;
wherein the access element is a decryption key for decrypting the encrypted data;
wherein the accessing further comprises
providing, by the first dataspace connector, the decryption key to the data-driven service;
obtaining, by the data-driven service, the encrypted data from the field device; and
accessing the obtained encrypted data by decrypting the encrypted data by use of the decryption key.

10. A method for connecting, in a dataspace system associated with a first company, a field device to the dataspace system in an industrial plant, the method comprising:
negotiating (S1210), by a first dataspace connector associated with the first company, with a second dataspace connector associated with a second company about access to encrypted data obtained by the field device, wherein the field device is used by the first company, is provided by the second company and is not under control of the second company;
based on a result of the negotiating, initiating (S1220), by the first dataspace connector, the field device to transfer the encrypted data to an external entity for the encrypted data to be decrypted by the external entity; and
obtaining (S1230), by a data-driven service associated with the first company, the decrypted encrypted data from the external entity based on the initiating.

11. The method according to any of claims 7 to 9 or according to claim 10, wherein the negotiating further comprises negotiating, by a third dataspace connector associated with the first company, with the second dataspace connector associated with the second company about access to the data or the encrypted data obtained by the field device.

12. A method for enabling connection of a field device (30) to a dataspace in an industrial plant, the method comprising:
negotiating (S710), by a second dataspace connector (21) associated with a second company (20), with a first dataspace connector (11) associated with a first company (10) about access to data obtained by the field device (30), wherein the field device (30) is provided by the second company (20), is used by the first company (10) and is not under control of the second company (20).

13. The method according to claim 12, wherein the negotiating further comprises negotiating, by a fourth dataspace connector associated with the second company (20), with the first dataspace connector (11) associated with the first company (10) about access to the data obtained by the field device (30).

14. A data processing apparatus (11, 800, 900) for connecting a field device to a dataspace in industrial plant, the data processing apparatus comprising a processor being configured to carry out the method of any of claims 1 to 6.

15. A data processing apparatus (21, 1000) for connecting a field device to a dataspace in industrial plant, the data processing apparatus comprising a processor being configured to carry out the method of claim 12.

16. A data processing system for connecting, in a dataspace system associated with a company, a field device to the dataspace system in industrial plant, the data processing system comprising means to carry out the method of any of claims 7 to 11 or to carry out the method of any of claims 12 and 13 .

17. A computer-readable medium comprising instructions which, when executed by a computing system, cause the computing system to perform the method of any of claims 1 to 6, to perform the method of any of claims 7 to 11, or to perform the method of any of claims 12 and 13.

18. A computer program product comprising instructions which, when executed by a computing system, enable and/or cause the computing system to perform the method of any of claims 1 to 6, to perform the method of any of claims 7 to 11, or to perform the method of any of claims 12 and 13.
